# EUROPEAN PATENT APPLICATION

(11) **EP 1 178 597 A1**
(43) Date of publication of application: **06.02.2002**
(21) Application number: 00935756.7
(22) Date of filing: 12.04.2000
(51) Int. Cl.: H02N 13/00, G05G 5/08

(54) **ELECTROSTATIC DEVICES FOR MECHANICAL BLOCKING**

(30) Priority: 14.04.1999 RU 99107534
(71) Applicant: NUNUPAROV, Martyn Sergeevich, Moscow, 103460 (RU)
(72) Inventor: NUNUPAROV, Martyn Sergeevich, Moscow, 103460 (RU)
(74) Representative: Patentanwälte Zellentin & Partner
(86) International application number: PCT/RU00/00127
(87) International publication number: WO 00/62411

(57) **Abstract**

The present invention relates to the art of electromechanical blocking devices which are used in automation for blocking and interlocking of moving parts of mechanisms, engaging transmission components and development of valve mechanisms in gas/hydraulic distribution systems making it possible to control their operation by low-power electrical signals. The invention also describes various modifications of electromechanical power interlocking devices where the low-power electrostatic interaction of their components are used for power blocking of the movement of device engagements parts. Electrostatic mechanical blocking devices hold out much promise in such areas as robotics and design of electromechanical control devices, particularly with systems where electrical energy consumption is a critical parameter, as their power supply is either limited or absent altogether, in particular, systems energized from solar cells. Owing to an extremely low electric power consumption, electrostatic mechanical interlocks can also be used to advantage in the development of completely independent electronic systems with no electric power sources which entirely depend for operation on mechanical energy, external or their own, which is partially converted into electrical power for electronic control devices.

The invention can be succesfully used for the development of electronic locks, electrical clutches and other mechanical movement transmission mechanisms, as well as electronically controlled valve gear and other interlocking devices characterized by super low consumption of electric power.

## Description

### Field of the Invention

The present invention relates to the art of electromechanical devices which are used in automation for blocking and interlocking of moving parts of mechanisms, engagement of parts in transmissions, development of valve mechanisms in gas/hydraulic distribution systems and make it possible to control the operation of said mechanisms and transmissions by low-power electrical signals.

The invention also describes various versions of electromechanical power interlocking devices where the use of a weak electrostatic interaction of specially treated members, charged by an static electric charge, as a source of fixing mechanical forces indirectly leads to appearance of power blocking the relative movement of the device components.

The invention can be used for the development of electronic locks, electrical clutches and other mechanical movement transmission mechanisms, as well as electronically controlled valve gear and other interlocking devices characterized by super low consumption of electric power.

### Background of the Invention

Known in the art is an electrostatic gate, US patent 4912460, which uses the effect of electrostatic interaction of gates members in order to move them and locate in different positions.

In the known device the magnitude of electrostatic forces of mutual attraction of members of electrostatic gate is largely determined by the character of the surfaces of said interacted members and the distance between them.

It is common knowledge that electrostatic forces increase with an increase in the effective contact area of interacting surfaces, and decrease in the effective distance between said surfaces and the growth of dielectric permittivity of the gap between them.

These conditions restrict the use of the prior art device, as the forces of electrostatic attraction of said device members located originally at a certain distance from one another are too small to permit reliable control of their mutual approach. Besides, direct use of electrostatic forces for the movement of attracted members is not desirable from the viewpoint of energy saving.

In another known device (RF patent No. 2042028) electrostatic interaction of its members is more effective, as the members are located in close proximity to one another and their relative positions are fixed by the friction forces that increasing indirectly under the influence of electrostatic attraction. Since, the electrostatic force and friction forces do not do any mechanical work its action, consequently, does not call for any additional energy from the source of electric power.

It should be stressed again that the electrostatic interacting force used in both known devices is highly sensitive to the adverse effect of roughness of the interacting surfaces, to the presence of foreign particles trapped between them, as well as to the variation of clearance between said surfaces owing to their nonflatness.

This sensitivity accounts for special requirements attached to high polish and flatness of surfaces of interacting members (or in general, their mutual conformability), as well as to high cleanness of assembly of devices. The known devices are deficient in that they are costly in terms of manufacturing expenses, not reliable in operation and their service life is limited.

These drawbacks restrict the scope of their application.

### Summary of the Invention

It is an object of the present invention to provide a inexpensive process for the manufacture of an electrostatic fixing unit for electromechanical devices that would be capable of reliable fixing of its interacting members in a definite position in respect of one another.

The above object is accomplished owing to the fact that the electrostatic fixing unit for fixing of members of a mechanical device comprises a housing of an electrostatic fixing unit, a fixing member arranged in said housing and movable from one position to another, an electrostatic fixing means designed for fixing the movement of a fixing member in one of the positions, arranged in said housing and comprising two conducting members with a dielectric layer between them, the conformable surfaces of said members being intended for electrostatic interaction and mutual fixing of one relative to the other when in close proximity to each other and when an electric charge is applied to said conducting members, one of said conducting members of said electrostatic fixing means being cinematically linked to a fixing member, a means for applying an electric charge to conducting members, said means being connected to said conducting members, at least one member of said electrostatic fixing means comprising a layer of elastic material on a conformable surface, said elastic material being selected from a group consisting of a conducting material and a dielectric material.

One of the principal advantages of elastic material consists in that it clings to interacting conformable surfaces of conducting members located in close proximity to one another and compensates the lack of tightness between them referable to surface irregularities, to its roughness, to foreign defects and, in particular, to their nonflatness. As a result, the effective contact area of conformable surfaces and, consequently, the electrostatic interacting force increases appreciably.

This advantage makes it possible to reduce working voltages required for reliable operation of the electrostatic fixing unit.

Another important advantage of the elastic material reveals itself when said material is used in electrostatic fixing units operating under conditions of considerable vibration when the effective distance between conformable surfaces is subject to rapid change with a resultant weakening or even a momentary loss of electrostatic interaction of conducting members. Such temporary variations of the clearance between interacting members are effectively compensated for by said elastic material.

Yet another advantage of elastic material consists in that it allows for a rough approach and positioning of conformable surfaces relative to one another in the state of close proximity that simplifies the manufacturing process of interacting members and means for their positioning.

Elastic materials required for accomplishment of the object of the invention may be dielectric or conducting. In the event that an elastic material is conducting, it is advisable to place its nonelastic dielectric counterpart separating the conformable surfaces on the mating hard surface. Should the choice be made in favour of a dielectric elastic material, it is important that it is relatively thin and its dielectric permittivity is sufficiently high to provide effective electrostatic interaction of conducting members divided by it.

Elastic materials may also be in a multilayer form comprising conducting and dielectric sublayers. Such a form is suitable in those cases when the elasticity of the material is provided by one of its layers, for instance, by a dielectric sublayer, and the second sublayer which is relatively thin performs a conducting function of the material or, conversely, when the elastic sublayer is conducting, and the other thin sublayer performs a dielectric function.

Conducting sublayers in elastic material may be provided by different methods, for instance, by depositing a sublayer of metal on a sublayer of a dielectric material, by introducing particles of conducting material into a surface of a dielectric sublayer by the diffusion or implantation methods, as well as by chemical or stoichiometric treatment of the surface of a dielectric sublayer which changes its composition and renders said surface layer being conducting.

Similar methods may be used for creation of dielectric sublayers on a conducting layer, for instance, by depositing a dielectric sublayer, oxidizing the surface of a conducting layer and other methods of chemical or electrochemical treatment of a conducting layer surface as a result of which it surface becomes non-conducting.

Very moderate in price and easy to manufacture is an elastic material made in the form of a thin elastic film fastened on a framework.

Film can also be produced in a multilayer form comprising a conducting and a dielectric sublayers. The most preferable embodiment of elastic film with a conducting sublayer is an elastic dielectric polymer film with a thin sublayer of metal deposited on one or both film surfaces.

Film can be attached to a corresponding conducting member of an electrostatic fixing means both by securing its framework on said member and by directly attaching said film to said member in certain spots.

Some embodiments allow for direct attachment of elastic film to a conducting member of an electrostatic fixing means without any links between said member and the films framework which is held in the construction owing to the film tension, that feature adds to the pliability of said film surface in the process of the adaptation of said film to a conformable surface of another member.

An additional advantage offered by thin elastic films consists in that the film surface may be easily made to take on different forms, including three-dimensional topological ones by varying the shape of the framework. In particular, the framework may be given the form of a flat circle, a rectangle, or a complex three-dimensional contour.

In some cases the framework may be made from the elastic material too, allowing it to change its shape in response to a mechanical action.

For fastening a piece of film on a conducting member of a fixing unit and/or on a framework one can use different technology, such as gluing, welding or clamping the film between two elements of a framework (like in a tambour used for sewing patterns on a piece of cloth).

In a number of cases, for instance, when it is necessary to electrically isolate conducting elements and mechanical members of an electrostatic fixing unit it is advisable to apply an electric charge directly to the conducting layer of the film, for which purpose the means for applying an electric charge is directly connected to a conducting layer or sublayer of the film.

Many designs provide for a multielement framework for film, e.g. a framework that includes nonlinked members.

In particular, a framework comprising two nonlinked flat rings makes it possible to form the film with various shapes and, as a result, to design functionally different devices.

For instance, a framework comprising two nonlinked rings with different diameters located in one plane and one inside the other permits attaching the film in the form of a flat ring. Such a framework, in particular, useful for devices wherein the axle passes through the inner framework ring. As has already been mentioned, it is permissible to fasten only one of the two framework rings on conducting members of an electrostatic fixing means. Being completely unrestrained, the second ring provides for a high degree of pliability of the conformable surfaces of interacting members.

A framework comprised of two coaxial rings, which have equal diameters and are located in different parallel planes makes it possible to form elastic film into the shape of a cylinder. This particular embodiment of the conformable surface of a member of an electrostatic fixing means permits manufacturing of electrostatic fixing units having one small overall dimension for different compact electromechanical devices.

A framework comprised of a ring and a disc, which have different diameters and are located coaxially in different parallel planes makes it possible to form the film into the shape of a cone. This embodiment is preferable in the case of small-size electrostatic fixing units when it is necessary to move apart conformable surfaces to a certain distance from one another.

In a general case, a piece of film may be fastened so that a part thereof may remain loose on the framework. For instance, one of the possible embodiments of an electrostatic fixing means may comprise a rectangular piece of film attached on a rigid framework only along one or two sides. In that embodiment the film will be free to take on a final shape that would conform to the shape of the surface of the mating conducting member of an electrostatic fixing means in the shape of a cylinder, a thin bar, etc.

Since the distribution of the electric charge over the surface of the conducting member is but little affected by the resistance of its conducting layer, the elastic material may be selected from a group of conducting polymers whose conductance is relatively low in comparison with metals, but the elastic properties are strongly pronounced.

When selecting a polymer base for elastic materials, both bulk and film-like, for their layers and sublayers, as well as for coatings on nonelastic surfaces of electrostatic interacting members of an electrostatic fixing means it is advisable to turn to compositions featuring high mechanical wear resistance, high dielectric permittivity, climatic and temperature stability and longevity.

The above qualities are typical of materials based on or containing polyethyleneterephthalate, polytetrafluoroethylene, polythreefluorochloroethylene, polyimide, as well as different kinds of rubber, in particular, silicon rubber.

A promising pair for members of an electrostatic fixing means is elastic conducting polymer on one member and semiconducting material on another member. Besides all the aforesaid advantages characteristic of elastic materials, this pair will display the Jonson-Rabek effect that increases electrostatic interaction.

The design of the electrostatic fixing unit allows for a considerable diversity in the relative location, movements and final positions of conformable surfaces of unit members.

Conformable surfaces may be placed in close proximity to one another and come in touch with one another over the entire contact area or only over a part thereof. They can move in the direction of their surfaces, reciprocate and perform rotary motions. When an electric charge is applied to conducting members, the conformable surfaces get fixed relative to one another owing to an indirect increase of their mutual friction forces.

In another embodiment of the electrostatic fixing unit conformable surfaces of conducting members may have two end positions: one in close proximity to one another, and the other, at a certain distance from one another. Hence, said members can move respectively along their conformable surface or in the direction normal to it.

When the surfaces of said members are remote from one another, the value of possible electrostatic interaction between them weakens considerably, wherefore said members may be fixed relative to one another only when they are placed in a position of close proximity. Such placement may be achieved by exerting an influence on the fixing member, which is cinematically linked to one of the said members.

In most designs, conducting members have one initial position and there is a need for additional setting of the certain means for returning of said conducting members to this position after they have completed their motions relative to one another. Such a returning means may be directly linked to the electrostatically interacting members or, as a possible alternative, serve as an intermediate link between the fixing member and the housing of the electrostatic fixing unit.

Electrostatic fixing units will find a ready acceptance as electromechanical gate control mechanisms for gas/hydraulic distributing systems.

A specific example illustrating this embodiment is an electrostatic fixing unit performing the function of an electromechanical valve, said unit comprising additionally a pipe with a valve seat and a two-position gate, which plugs and unplugs the hole in this seat. The housing of the electrostatic fixing unit is mounted on a pipe, whereas the fixing member is mechanically linked to the gate.

Electrostatic interaction in electromechanics has been continually attracting designers' attention. For instance, known in the art is a clutch (US patent No. 5525642) wherein the engagement of two independent shafts is achieved with the help of an electrostatically controlled force of friction between two clutch members.

Despite the fact that said invention offers a method for enhancing electrostatic interaction by placing a semiconducting polymer material in the gap between interacting members, said material exhibiting Jonson-Rabek effect, the disclosed device also suffers from the aforementioned disadvantages of the electrostatic fixing units arising from their high sensitivity to the surface finish of interacting members and from the need for a highly accurate adjustment of the clearance between them.

The principal disadvantage, however, of the mentioned clutch consists in that it cannot be effectively used in mechanisms designed for accurate control of high-power shaft engagement forces, since the range of electrostatic control of the force of friction between interacting members is relatively small.

Known in the art are also electrostatic interlocks, which use electro-rheologic fluids changing their viscosity under the influence of an electrostatic field. However, the devices of this type are also deficient in that the mechanical force developed by said devices for fixing of electrostatically interacting members of the unit and of the fixing member linked to one of said members of the unit is not sufficient.

There is reason to state, therefore, that electrostatic fixing units cannot serve as reliable power members of electromechanical devices, since both the electrostatic field intensity and the indirect forces arising from the electrostatic interaction of members of said units are too small to steadily counterbalance forces exceeding one kilogram.

Hence, an electrostatic fixing unit can only be used to advantage as a controlling part of a power electromechanical device interacting cinematically with a power engagement means and participating in the preparation of said device for a change from the locked to the unlocked states and conversely, by applying to it a low-power electrical signal.

It is another object of the present invention, therefore, to provide an electromechanical device for power engagement of mechanism members, said members being designed for engagement which, owing to the presence of a power engagement means and an electrostatic fixing unit for fixing of said means enables power interaction of engagement members in response to a low-power electrical signal applied to said electrostatic fixing unit.

The above object is accomplished owing to the fact that an electromechanical device for power engagement of mechanism members comprising an electrostatic fixing unit which comprises a unit housing and a fixing member linked to said housing and arranged so that it can move from one position to the other, and a means to apply an electrical charge to said electrostatic fixing unit, comprises additionally at least two engaging members linked with said mechanism members and designed for moving into power engagement relative to one another, a power engagement means of said engaging members linked mechanically to at least one of said engaging members and having a locked position and an unlocked position, a returning means for said power engagement means to the initial position, said returning means being linked to one of said engaging members, said power engagement means being mechanically linked to the fixing member of said electrostatic fixing unit and said returning means for said power engagement means to the initial position being linked to at least one of the members selected from a group: a power engagement means or a fixing member.

It should be noted that the design of the electrostatic fixing unit in this electromechanical device may have different modifications which may provide for the use of elastic material in the gap between conducting members of said electrostatic fixing means, said elastic material being fastened on at least one of said conducting members, or electro-rheologic fluid. In both these embodiments the requirements to surface finish and accuracy of mutual positioning of conducting members are moderate.

The power engagement electromechanical device described above allows for different modifications of interlocking and transmissions devices.

For instance, it may be accomplished in the form of a planetary gear clutch designed to transfer rotary motion from one coaxial shaft to another, said planetary gear clutch comprising a ring gear secured on one shaft and provided with a slot and limiters on the toothed surface of said ring gear, a sun gear secured on the other shaft and located inside the ring gear. The clutch also comprises a means for power engagement with the sun gear and the ring gear, said means being made as a satellite gear having two positions: in one position the satellite gear fits into the slot of the ring gear so that the ring gear and the sun gear are out of the power transmission engagement with each other, and in the other position the satellite gear thrusts against a limiter so that the ring gear and the sun gear are engaged for power transmission. The housing of the electrostatic fixing unit is fastened on the same shaft as the sun gear, and the fixing member is made in the shape of a satellite gear carrier, which fix the angular position of the satellite gear in respect of the angular position of the sun gear when electric charge is applied to the electrostatic fixing unit. Said planetary gear clutch also comprises a means for returning the satellite gear to the slot of the ring gear, said means being a spring linked to said satellite gear carrier and said clutch ring gear.

The planetary gear clutch described above may transfer considerable torque from one shaft to the other in response to a low-power electrical signal applied to the electrostatic fixing unit that fix the position of carrier.

In another embodiment notable for a greater manufacturing simplicity the electromechanical power transfer clutch is an overrunning type comprising a bushing secured on one shaft, a cam secured on the other shaft, said cam being located inside a bushing and made in the form of a slotted disc, the slot being provided on the disc perimeter, a means for power engagement of the cam with the bushing, said means being essentially a friction disc located in the space between the cam and the bushing, the axis of said friction disc being parallel with the axis of the shafts, the disc diameter slightly exceeding the difference between the inner diameter of the bushing and the outer diameter of the cam so that the friction disc does not come into contact with the bushing when fitting in the cam slot and, when coming out of engagement with the cam slot, gets jammed by the force of friction in respect of the cam and the bushing, an electrostatic fixing unit designed for fixing of the angular position of the friction disc in respect of the angular position of the bushing, said electrostatic fixing unit being secured on the shaft of the bushing and comprising a fixing member, said fixing member being made in the shape of a flat fork rotating on an axle aligned with the shafts, said fork having a slot which serves as a guide for the friction disc during its reciprocating radial motion from the cam to the bushing. The means for returning the friction disc to the initial position, i.e. to the cam slot, is represented by a spring linked to the friction disc and to the cam axle.

Naturally, in a number of embodiments planetary or overrunning clutches may comprise more complex means for engagement of parts, such as, for instance, cassettes with more than one satellite gear or friction disc.

In the clutch embodiments described above a power engagement means moves from one position to the other as a result of its mechanical interaction with engaging members. Nevertheless, a number of embodiments of a power engagement device may additionally comprise a means for mechanical setting of said power engagement means in a selected position, said mechanical setting means being linked to one of the engaging members and required for forced displacement of the power engagement means.

In particular, in the disclosed embodiment of the invention the device, intended to prevent the transfer of motion from a driving member to a driven member of a transmission mechanism in which the driving member is made in the shape of a disc rotating about the axle, secured in the transmission mechanism and comprising a slot located on the disc perimeter, and the driven member is made in the shape of a bar reciprocating in a cradle secured in said mechanism, and the means for power engagement of the driving and driven members is made in the shape of a dog secured rotatably on an axle which is fastened on the driven member. The housing of said electrostatic fixing unit is arranged on the disc of the driving member, and the fixing member is made in the shape of a disc, whose axle is aligned with the axle of the driving member, with a slot on its perimeter. In this device the means for mechanical setting of the dog in a position of engagement with slots on the discs is represented by a spring connected to the bar and to the dog, and the means for returning the dog to the initial position is represented by a spring connected to the disc of the fixing member and to the housing member of said transmission mechanism.

The disclosed device can be very effective in various mechanical design of electronic locks.

### Brief Description of the Drawings

The invention will now be described in detail with reference to the accompanying drawings illustrating specific embodiments thereof:
Figure 1 is a general view of the electrostatic fixing unit;
Figures 2a, b show a real rough structure of conformable surfaces of conducting members positioned in close proximity to one another;
Figure 3a, b show the influence of defects on untight fit of surfaces;
Figure 4a represents an embodiment of conducting members of an electrostatic fixing means with elastic film attached on a framework;
Figure 4b illustrates the method of fastening the film by clamping it between two elements of a framework like in a tambour;
Figure 4c represents a preferred sublayer structure of elastic film;
Figure 5a represents an example of fastening a piece of film in the form of a cylinder;
Figure 5c represents an example of fastening a piece of film in the form of a cone;
Figures 5d, e and f represent examples of fastening a piece of film having unattached areas;
Figures 6a and b illustrate examples of the arrangement of a means for returning members of the electrostatic fixing means to the initial position;
Figure 7 illustrates an electromechanical valve comprising an electrostatic fixing unit;
Figures 8a and b illustrate operation of an electrostatic planetary gear clutch;
Figures 9a and b illustrate operation of an electrostatic overrunning clutch;
Figure 10 illustrates a reciprocating transmission mechanism.

### Description of Preferred Embodiments of the Invention

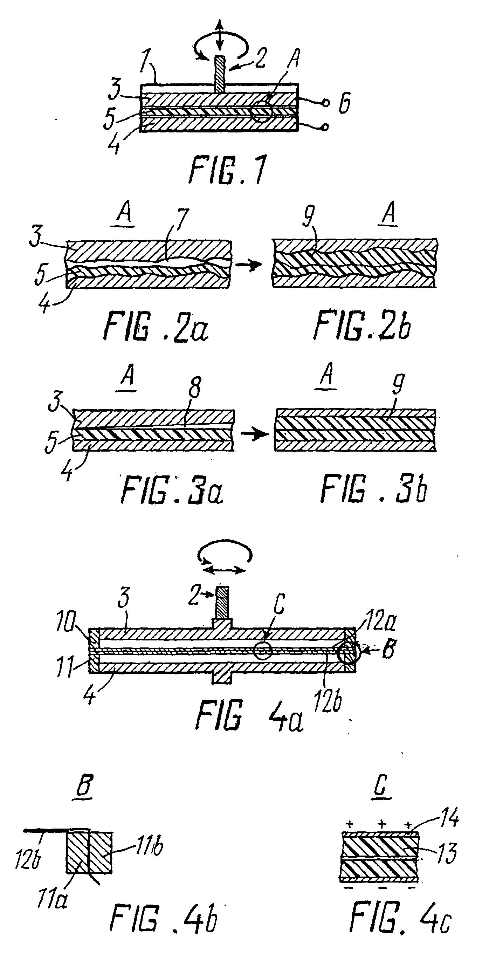

As is shown in Figure 1, the electrostatic fixing unit comprises housing 1, fixing member 2 arranged in the housing and partly extending from it, conducting members 3 and 4 separated by dielectric 5 and also arranged in the housing, one of said conducting members 3 being linked to fixing member 2.

The real surface of conducting members shown in Figure 2a has irregularities 7 which increase the effective distance between conformable surfaces. As is seen from Figure 3a, hard foreign particles 8 trapped in the clearance between the surfaces produce a similar negative effect.

In the event that the surface of at least one of the conducting members contains elastic material 9, this material compensate, as is shown in Figure 2b and Figure 3b, an untightness between hard surfaces owing to their roughness (irregularities) and assembly defects of the fixing unit.

Moreover, the opposite-sign charges of interacting equipotential surfaces are located closer to one another, thereby increasing their electrostatic interacting force.

As has already been noted, the most producible version of manufacturing of conducting members with elastic material on a conformable surface is the method wherein said elastic material is an elastic film fastened on a framework. Figure 4a illustrates an embodiment of conducting members 3 and 4 each of which carries its own framework 10 and 11 respectively with films 12a and 12b fastened thereto and forming elastic conformable surfaces for member 3 and member 4 respectively.

Illustrated in Figure 4b is a method of fastening the film by clamping it in a tambour which can be made from two framework elements 11a and 11b similar in shape and having the same size for suitable mechanical coupling.

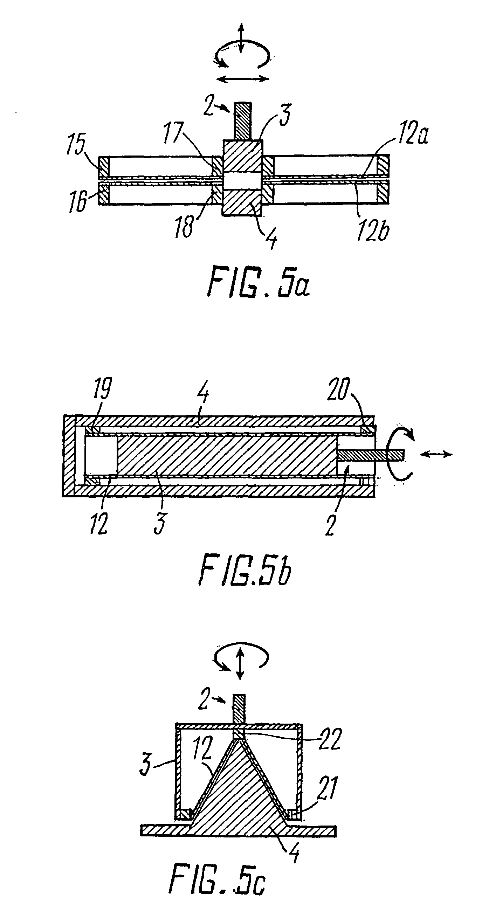

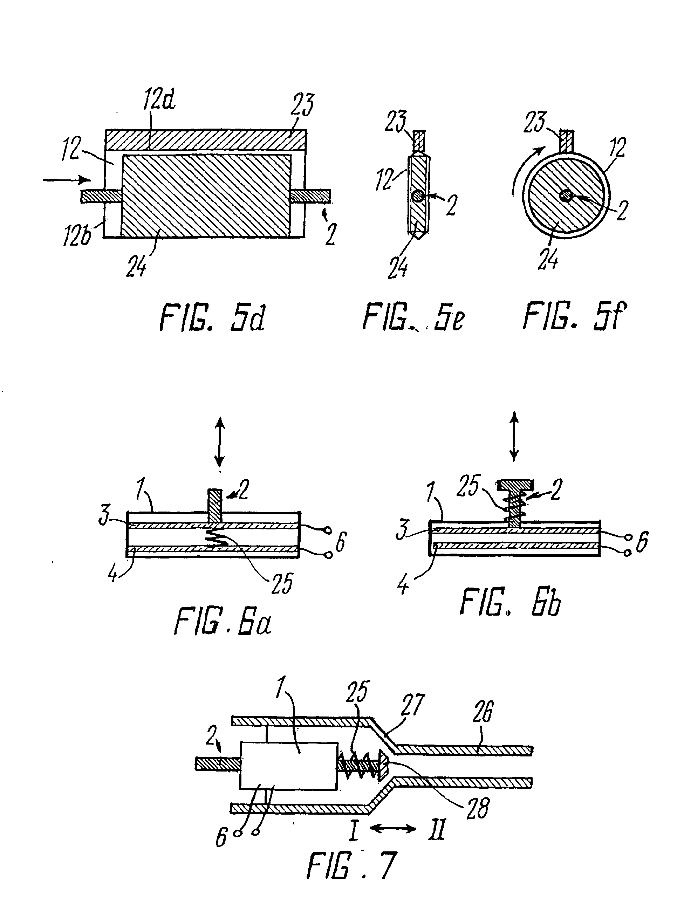

Illustrated in Figure 5 are different embodiments of framework designs for films making it possible to produce different shapes of conformable surfaces.

Thus Figure 5a illustrates the design of frameworks 15, 17 for conducting member 3, and the design of frameworks 16, 18 for conducting member 4, said members being made in the form of flat rings arranged on coaxial conformable planes.

The films fastened on such frameworks have many degrees of freedom and their surfaces easily adapt themselves to one another in the conditions of electrostatic interaction.

In Figure 5b film 12 has a cylindrical form owing to the coaxial arrangement of rings 19 and 20 of its framework on different planes. Such a design allows for creation of electrostatic fixing units with small dimensions of members 3 and 4 in one section.

Figure 5c illustrates yet another embodiment wherein film 12 is fastened on a framework with disc member 22 and ring member 21 arranged on different planes and having different diameters. In this configuration the film takes on the form of a cone.

In Figure 5d a piece of film 12, rectangular in form, is rolled along one side of contour 12c and fastened on rigid frame 23 along the other side of contour 12d, so that the resultant three-dimensional shape of the film surface is determined by the form and position of second conducting member 24 of the electrostatic fixing means which is inserted into the inner space formed by film 12. Figure 5e and Figure 5f illustrate specific examples of a section of different embodiments of the conjugation of conducting members of an electrostatic fixing means with a partially free film on one of such members.

During movement of conducting members in respect of one another they may occupy different positions and it often happens so that they need to be returned to a position, which was chosen as the initial one.

In order to perform this function, the electrostatic fixing unit is additionally provided with a means for returning the conformable surfaces of conducting members to said initial position.

Such a means may be represented, for instance, by spring 25 installed between conducting members 3 and 4 as is illustrated in Figure 6a, or between the housing of unit 1 and fixing member 2, as shown in Figure 6b.

A peculiar field for application of an electrostatic fixing unit opens in connection with the development of valve mechanism designs. As an example, Figure 7 illustrates a schematic design of a gas valve intended to close the hole made in the shape of valve seat 27 of pipe 26. The valve comprises two-position gate 28: in one position the hole in valve seat 27 is plugged, and in the other one, the hole is open. The gate may be located in one of these positions owing to its mechanical connection with fixing member 2 of the electrostatic fixing unit whose housing 1 is secured in the pipe.

As has already been noted, a large variety of designs of electrostatic fixing units make it impossible to develop power interlocks. For this reason, in order to use the advantages of electrostatic fixing units in power transmission mechanisms, it is necessary to provide said units additionally with engaging members, a means for bringing said members into power transfer engagement with one another, said means being linked to a fixing member, as well as with a means for returning said power engagement means from the "locked" position to the "unlocked" position, or vice versa.

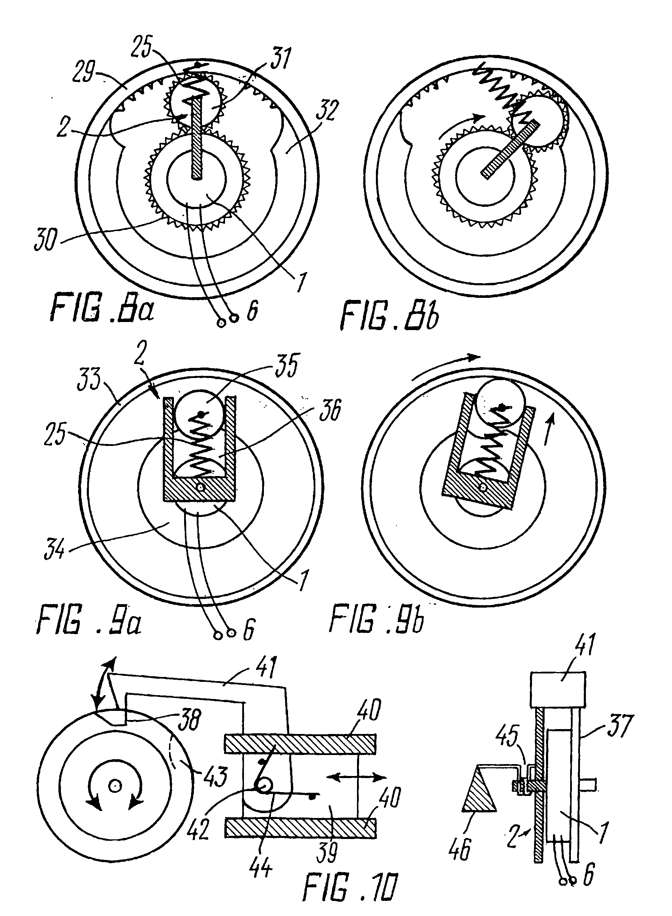

Figures 8a and 8b illustrate respectively the "unlocked" and "locked" positions of the planetary gear clutch comprising ring gear 29, sun gear 30 and satellite gear 31. In some place the toothed surface of the ring gear is provided with a slot where the area adjacent to it is free from teeth, therefore the satellite gear does not interact with the ring gear in said area. The ring gear also has satellite gear limiter 32 defining the end positions of the satellite gear when it comes out of said slot. The housing of electrostatic fixing unit 1 is fastened on the sun gear, and fixing member 2 connected with said electrostatic fixing unit performs the function of the satellite gear carrier.

The means for returning the satellite gear to the initial position is represented by spring 25 fastened on the ring gear and connected to the satellite gear carrier.

Figures 9a and 9b illustrate the design of an electrostatic overrunning clutch which comprises bushing 33 secured on one shaft, cam 34 which is secured on another shaft and is provided with a slot on its perimeter, friction disc 35 located in the space between the cam and the bushing, electrostatic fixing unit 1 which is intended for location of the angular position of the friction disc relative to the angular position of the bushing, secured on the shaft of the bushing and comprises a fixing member made in the shape of flat fork 36 rotating on an axle aligned with the shafts, said fork having a slot which serves as a guide for the friction disc during its reciprocating radial motion from the cam to the bushing. The means for returning the friction disc to the initial position, i.e. to the cam slot is represented by a spring connected to the friction disc and to the cam axle.

Figure 10 illustrates another power transmission mechanism wherein driving member 37 is made in the shape of a disc rotating about the axle, secured in the transmission mechanism and comprising slot 38 located on the disc perimeter. Driven member 39 is made in the shape of a bar reciprocating in cradle 40 secured in the housing of said mechanism. The means for power engagement of the driving and driven members is made in the shape of dog 41 secured rotatably on axle 42, which is secured on the driven member. Housing 1 of said electrostatic fixing unit is arranged on the driving member disc, and fixing member 2 is also made in the shape of a disc whose axis of rotation coincides with the axis of rotation of the driving member, said fixing member disk comprising slot 43 on its perimeter. In this device the means for mechanical setting of the dog in a position of engagement with the slots on discs 2 and 37 is represented by spring 44 connected to the bar and to the dog, and the means for returning the dog to the initial position is represented by spring 45 connected to the disc of fixing member 2 and to the body member 46 of said transmission mechanism.

As indicated above, the designs of conducting members with elastic film illustrated in Figure 5 allow for a considerable diversity in their motions relative to one another and, consequently, in the movements of the fixing member. Different methods of fastening said film on the framework, as well as the fastening of the framework elements itself on conducting members allows developing various designs in which the fixing member reciprocates in different directions, makes rotary motions and performs more complex movements combining the aforesaid two types of motion.

Arrows in Figures 5a, b, c, d, and e illustrate permissible directions of the movement of the fixing member in different designs of the electrostatic fixing unit.

The fixing member may be fixed in different positions when conducting members are in close proximity to one another and when an electrical charge is applied to them.

As soon as the conducting members are discharged, the returning forces applied to the fixing member will return it to the initial position.

For instance, when an external force applied to fixing member 2 (see Figure 6) brings conducting members 3 and 4 close to one another, and electrical charge applied to said members in opposite polarity electrostatic attraction overcomes the counteracting force of return spring 25. When the conducting members are discharged, the force of attraction disappears and the fixing member returns to the initial position.

This operational scheme of the electrostatic fixing unit has been used for controlling the operation of the valve illustrated in Figure 7. When the valve is in the initial (closed) position, the gate plugs the hole in the valve seat, and the second (open) position of the gate - apart from the valve seat, can be fixed when an electrical charge is applied to the electrostatic fixing unit.

Specific examples illustrating various embodiments of power engagement electromechanical devices with an electrostatic fixing unit are presented in Figures 8 through 10. These devices operate as follows.

In the initial position of the members of the planetary gear clutch shown in Figure 8a the electrostatic fixing unit has no static charge and the satellite gear carrier can freely rotate about its axis which is in line with the axis of the sun gear. The satellite gear fits in the slot and spring 25 keeps it in a said position, which prevents the satellite gear from coming into engagement with the teeth of the ring gear. As a result, the rotation of the sun gear in the initial position is accompanied by free rotation of the satellite gear about its own axis and the driving and driven shafts are disengaged.

When an electrical charge is applied to electrostatic fixing unit 1, the fixing member and satellite gear carrier 2 get fixed in respect of the angular position of the sun gear. So, when the sun gear, for instance, rotates clockwise, the carrier starts rotating in the same direction. Being mechanically linked with the carrier, the satellite gear is pulled out of the slot and, turning by a certain angle, thrusts against ring gear limiter 32 as is shown in Figure 8b.

The teeth of the ring gear in the area of the limiter engage into power engagement with the teeth of the satellite gear which results in a power engagement of the sun gear and ring gear and, consequently, in the power engagement of the driving and driven shafts.

Such power engagement will be maintained as long as the driving shaft is kept rotating clockwise and does not need any continuous electrical supply to maintain the charge of the electrostatic fixing unit, i.e. no additional power drain is required to keep the shafts engaged.

When the electrostatic fixing unit is discharged and no more torque is applied to the driving shaft, the gear satellite carrier gets free and the gear satellite is returned to its initial position by spring 25. The power engagement of the driving and driven shafts is released.

The overrunning clutch illustrated in Figure 9 operates in a similar manner. With the clutch in the initial position, the friction disc is held by spring 25 in the slot of cam 34 and has no contact with the internal surface of bushing 33. As a result, the driven and driving shafts are disengaged.

When an electric charge is applied to electrostatic fixing means 1, fork 2 is fixed in a definite angular position in respect of bushing 33, wherefore clockwise rotation of bushing 33 causes fork 2 to move in the same direction pulling friction disc 35. The friction disc rolls out of the cam slot and thrusts against the surface of bushing 33 as is shown in Figure 9b. With a proper selection of the diameters of cam 34, bushing 33 and friction disc 35 these members develop a powerful interacting force of friction when the angles of interaction of said members become smaller than the angle of their friction. As a result, the aforesaid members get jammed and the driving shaft starts pulling the driven shaft.

When the electrostatic fixing unit loses its charge, fork 2 gets released and the driving shaft torque diminishes, the engagement of members 33, 34 and 35 falls off in power and the return spring pulls friction disc 35 back to the initial position in the slot of the cam. As a result, the driving and the driven shafts get out of engagement with each other.

The transmission mechanism illustrated in Figure 10 operates as follows.

Initially, the angular positions of slots 38 and 43 located on discs 37 and 2 respectively do not coincide. Dog 41 cannot slip into slot 38, therefore the torque of rotating driving disc 37 cannot be transmitted to driven member 40.

In order to move dog 41 into power engagement with driving disc 37, it is necessary to turn driving disc 37 clockwise till slots 38 and 43 are aligned, and then apply an electrical charge to electrostatic fixing unit 1, thereby locating discs 2 and 37 relative to each other.

If driving disc 37 is further rotated counterclockwise, it will carry along disc 2. The moment both slots find themselves under the dog tooth, the latter will slip in under the action of spring 44 and move into power engagement with driving member 37.

During further counterclockwise rotation of disc 37 dog 41 carried along by said disc 37 will transmit torque to the bar 39.

When the electrostatic fixing means will be discharged, compressed spring 45 will pull slots 43 and 38 on discs 2 and 37 out of alignment pushing the dog out of the locked position. Power engagement of driving disc 37 and driven bar 39 will be released.

### Industrial Applicability

It should be noted in conclusion that the disclosed invention opens up excellent opportunities for the development of automatic electronic systems substantially different from those based on the use of electromagnetic blocking units or devices for the movement of mechanical interlock members.

Owing to a considerable economy of electric power, electrostatic devices for mechanical blocking are instrumental in the development of a new generation of an entirely autonomous electronic systems using their own or external mechanical energy with its partial conversion into electric power to energize their electronic control devices.

Such systems have been rapidly gaining ground in the fields of robotics and design of electromechanical control devices for systems where electric power supply is either limited or absent altogether, and particularly for systems supplied with electrical power supply from solar cells.

## Claims

1. An electrostatic fixing unit for fixing of members of a mechanical device, comprising
a housing of an electrostatic fixing unit,
a fixing member arranged in said housing and movable from one position to another,
an electrostatic fixing means designed for fixing the movement of a fixing member in one of the positions, located in the housing and comprising of two conducting members with a dielectric layer between them, the conformable surfaces of said members being intended for electrostatic interaction and mutual fixing of one relative to the other when in close proximity to each other and when an electric charge is applied to said conducting members, one of said members of the electrostatic fixing means being cinematically linked to a fixing member,
a means for supplying an electric charge to said conducting members, said means being connected to said conducting members,
**characterized in that**
at least one member of said electrostatic fixing means comprises a layer of elastic material on a conformable surface, said elastic material being selected from a group of materials consisting of a conducting material and a dielectric material.

2. An electrostatic fixing unit according to Claim 1, **characterized in that** a layer of elastic material on the conformable surface comprises at least two layers of material, one of which is conducting, and the other is dielectric.

3. An electrostatic fixing unit according to Claim 2, **characterized in that** the layer of a conducting material is produced by a process selected from a group of processes comprising the deposition of a sublayer of metal on a sublayer of a dielectric material, introduction of particles of conducting material into a surface of a dielectric layer, or by such changes in the chemical or stoichiometric composition of the surface of a dielectric layer which make said surface sublayer conducting.

4. An electrostatic fixing unit according to any of Claims 1 - 3, **characterized in that** at least one layer of elastic material comprises an elastic film attached on a framework and connected to a corresponding conducting member of the electrostatic fixing means.

5. An electrostatic fixing unit according to Claim 4, **characterized in that** the attaching of an elastic film on a conducting member of the electrostatic fixing means and/or on a framework is accomplished by using one of the processes selected from a group of processes: gluing, welding or clamping.

6. An electrostatic fixing unit according to Claim 4, **characterized in that** an elastic film is a multilayer type produced from a materials selected from a group of materials: conducting and dielectric materials.

7. An electrostatic fixing unit according to Claim 4, **characterized in that** a part of the film surface is attached on a framework, and another part thereof is not attached on a framework, being unrestrained and freely adaptable in the process of interaction with conformable surfaces of conducting members.

8. An electrostatic fixing unit according to Claim 4, **characterized in that** the framework comprises at least two nonlinked elements.

9. An electrostatic fixing unit according to Claim 8, **characterized in that** the framework comprises two nonlinked rings of different diameters, both rings being located in one plane one inside the other, and **in that** the elastic film attached on the framework has the form of a flat ring.

10. An electrostatic fixing unit according to Claim 8, **characterized in that** the framework comprises two coaxial rings located in different parallel planes, and **in that** the elastic film attached on the framework has the form of a cylinder.

11. An electrostatic fixing unit according to Claim 8, **characterized in that** the framework comprises a ring and a disc having different diameters and being located coaxially in different parallel planes, and **in that** the elastic film attached on the framework has the form of a cone.

12. An electrostatic fixing unit according to any of Claims 1 - 11, **characterized in that** the layer of elastic material on the member of the electrostatic fixing means is produced from conducting material selected from a group of polymer materials.

13. An electrostatic fixing unit according to any of Claims 1 - 11, **characterized in that** the layers and sublayers of conformable surfaces are made from materials selected from a group based on polyethyleneterephthalate, polytetrafluoroethylene, polythreefluorochloroethylene, polyimide and silicon rubber.

14. An electrostatic fixing unit according to any of Claims 1 - 11, **characterized in that** the materials for the layers of the conformable surfaces are produced from semiconducting materials.

15. An electrostatic fixing unit according to any of Claims 1 - 11, **characterized in that** the conformable surfaces of conducting members are located in close proximity to one another, their movement permissible in the direction of their surfaces, and **in that** the appliance of an opposite electrical charge to them fix their relative positions.

16. An electrostatic fixing unit according to any of Claims 1 - 14, **characterized in that** the conformable surfaces of conducting members have two positions, one in close proximity to one another, and the other, at a certain distance from one another, and **in that** said conducting members move relative to one another from one of said positions to the other position in response to a mechanical force applied to a fixing member, the electrostatic fixing of the mutual positions of said conducting members occurring when said members are positioned in close proximity to one another.

17. An electrostatic fixing unit according to any of Claims 1 - 16, **characterized in that** it is provided additionally with a means for returning the conformable surfaces of the electrostatic fixing unit members to one of the two selected positions, said means being arranged in the housing of said electrostatic unit and directly linked to said members.

18. An electrostatic fixing unit according to any of Claims 1 - 16, **characterized in that** it is additionally provided with a means for returning the fixing member to one of its selected positions, said means being connected to said fixing member and to the housing of the electrostatic fixing unit.

19. An electrostatic fixing unit according to any of Claims 17 and 18, made as an electromechanical valve of gas/hydraulic distributing system, **characterized in that** it comprises additionally
a pipe with a valve seat, a two-position valve gate, plugging the valve seat in one position and releasing it in the other position, the housing of said electrostatic fixing unit being secured in the pipe and the fixing member being mechanically connected to the valve gate.

20. An electromechanical device for power engagement of mechanism members, comprising
an electrostatic fixing unit, comprising
a unit housing and a fixing member linked to said housing and arranged so that it can move from one position to the other, and
a means for applying an electrical charge to said electrostatic fixing unit,
**characterized in that** it is additionally provided with
at least two engaging members linked to said mechanism members and designed for moving into power engagement relative to one another,
a power engagement means of said engaging members, said means being linked cinematically to at least one of said engaging members and having a locked position and an unlocked position,
a means for returning said power engagement means to the initial position, said returning means being linked to one of said engaging members,
said power engagement means being linked cinematically to the fixing member of said electrostatic fixing unit,
said returning means of said power engagement means to the initial position being linked to at least one of the members selected from a group: a power engagement means or a fixing member.

21. An electromechanical device according to Claim 20, **characterized in that** said electrostatic fixing unit comprises
an electrostatic fixing means designed to fix the fixing member in one of the positions, said means being arranged in the housing of the electrostatic fixing unit and comprising two conducting members and a layer of dielectric between them, the conformable surfaces of said conducting members serving for electrostatic interaction with one another and for fixing of each other in a position of close proximity to one another when electrical charge is applied to said conducting members, one of said members of the electrostatic fixing means being cinematically linked to said fixing member,
at least one conducting member of said electrostatic fixing means comprising a layer of elastic material located on the conformable surface, said elastic material being selected from a group comprising a conducting material and a dielectric material.

22. An electromechanical device according to Claim 20, **characterized in that** said electrostatic fixing unit comprises
an electrostatic fixing means designed to fix the fixing member in one of the positions, said electrostatic fixing means being arranged in the housing of the electrostatic fixing unit and comprising two conducting members and an electro-rheologic fluid between them, the conformable surfaces of said conducting members serving for electrostatic interaction and for fixing of one relative to the other when they are in close proximity to each other when electrical potential is applied to said conducting members, one of said members of the electrostatic fixing means being linked cinematically to said fixing member.

23. An electromechanical device according to any of Claims 20 - 22, **characterized in that** it is made in the form of a planetary gear clutch designed to transfer rotary motion from one coaxial shaft to another and comprises:
a ring gear secured on one shaft, said ring gear having a slot and limiter located on the toothed surface of said gear,
a sun gear secured on the other shaft and located inside said ring gear,
a power engagement means for said sun gear and said ring gear, said means being made as a satellite gear having two positions:
- in one position the satellite gear fits into the slot of the ring gear so that the ring gear and the sun gear are out of power engagement with each other, and
- in the second position the satellite gear thrusts against the limiter so that the ring gear and the sun gear are in engagement with each other for power transmission,
the housing of the electrostatic fixing unit being secured on the same shaft as the sun gear , and the fixing member being made in the form of a satellite gear carrier and intended to locate the angular position of the satellite gear relative to the angular position of the sun gear when an electric charge is applied to the electrostatic fixing unit,
a means for returning said satellite gear to the slot of said ring gear, said means representing a spring linked to said satellite gear carrier and to said ring gear of the clutch.

24. An electromechanical device according to any of Claims 20 - 22, **characterized in that** it is made as an overrunning clutch designed for transfer of rotary motion from one shaft to the other coaxial shaft and **in that** it comprises:
a bushing secured on one shaft,
a cam secured on the other shaft and arranged inside a bushing, said cam being made in the form of a disc with a slot located on its perimeter,
a power engagement means of the cam with the bushing, said means being made in the form of a friction disc located in the space between said cam and said bushing, the axis of said friction disc being parallel with the axis of shafts and the diameter of said disc slightly exceeding the difference between the inner diameter of said bushing and the outer diameter of said cam so that said friction disc has no contact with said bushing when fitting into the cam slot and gets jammed by the force of friction between the cam and the bushing, thereby moving them into power transmission engagement with each other,
an electrostatic fixing unit designed to locate the angular position of the friction disc relative to the angular position of the bushing, said electrostatic fixing unit being secured on the shaft of the bushing and comprising:
a fixing member made in the form of a fork rotating on an axle aligned with the shafts, said fork having a slot which serves as a guide for the friction disc during its reciprocating radial motion from said cam to said bushing,
a means for returning said friction disc to the initial position, i.e. to the cam slot, said means being a spring connected to the friction disc and to the cam axle.

25. An electromechanical device according to any of Claims 20 through 22, **characterized in that** it is additionally provided with a means for mechanical setting of a power engagement means in a selected position, said mechanical setting means being linked to one of the engagement members.

26. An electromechanical device according to Claim 25 designed to prevent the transfer of motion from a driving member to a driven member of a transmission mechanism **characterized in that**
the driving member is made in the shape of a disc rotating on the axle, secured in the transmission mechanism and comprising a slot located on the disc perimeter,
the driven member is made in the shape of a bar reciprocating in a cradle secured in the housing of said mechanism,
the power engagement means for the driving and driven members that is made in the shape of a dog secured rotatably on an axle which is fastened on said driven member,
the housing of said electrostatic fixing unit is arranged on said driving member disc,
the fixing member is made in the shape of a disc whose axle is aligned with the axle of the driving member, said fixing member disc having a slot on its perimeter,
the means for mechanical setting of the dog in a position of engagement with slots on the discs is represented by a spring connected to the bar and to the dog,
the means for returning the dog to the initial position is represented by a spring connected to the disc of the fixing member and to a member of the housing of said transmission mechanism.
